# EUROPEAN PATENT SPECIFICATION

(11) **EP 2 932 136 B1**
(45) Date of publication and mention of the grant of the patent: **26.02.2020**
(21) Application number: 13865177.3
(22) Date of filing: 11.12.2013
(51) Int. Cl.: B60W 50/14, B60W 30/188, F16H 61/02

(54) **METHOD AND SYSTEM FOR GUIDANCE OF DRIVER BEHAVIOUR DURING DRIVING OF MOTOR VEHICLES**
VERFAHREN UND SYSTEM ZUR ANLEITUNG DES FAHRVERHALTENS EINES FAHRERS BEIM FAHREN VON KRAFTFAHRZEUGEN
PROCÉDÉ ET SYSTÈME DE GUIDAGE DE COMPORTEMENT DE CONDUCTEUR PENDANT LA CONDUITE DE VÉHICULES AUTOMOBILES

(30) Priority: 17.12.2012 SE 1251431
(43) Date of publication of application: 21.10.2015
(73) Proprietor: Scania CV AB, 151 87 Södertälje (SE)
(72) Inventor: BREDBERG, Linus, SE-146 34 Tullinge (SE); LARSSON, Olof, S-127 43 Skärholmen (SE); RICKMAN, Johnny, S-152 71 Södertälje (SE)
(74) Representative: Scania CV AB
(86) International application number: PCT/SE2013/051482
(87) International publication number: WO 2014/098732

(56) References cited:
- EP-A1- 2 050 989
- WO-A1-2009/054757
- DE-A1- 19 605 342
- DE-A1- 19 740 648
- US-A- 5 416 698
- US-A1- 2005 143 221
- US-A1- 2010 087 292
- US-A1- 2010 087 292

## Description

### TECHNICAL FIELD

The invention relates to a method for guidance of driver behaviour during driving of motor vehicles according to the preamble of claim 1. The invention relates to a system for guidance of driver behaviour during driving of motor vehicles according to the preamble of claim 6. The invention relates also to a motor vehicle. The invention also relates to a computer programme and a computer programme product.

### BACKGROUND

Driving in arduous terrain, as on logging roads or in quarries or mines, often involves severe requirements with regard to correct gear choice. A missed or incorrect gear change may result in the vehicle becoming stationary when travelling uphill, potentially leading to time-consuming and difficult reversing and/or having to drive off in such a way as to cause clutch wear. To avoid this, in cases where it is doubtful that an upshift is possible, the driver may avoid it and instead put the engine onto a maximum power output plateau, which in one variant is a range of the order of 1500-2000 rpm, in order to travel more quickly up the hill.

However, the internal losses in the engine and the gearbox increase with engine speed, which means that the same power offtake at a higher engine speed, e.g. 2000 rpm, will result in greater fuel consumption than might be the case at a lower speed on the maximum power output plateau, e.g. 1500-1600 rpm. There will also potentially be more engine and gearbox wear. It is therefore not advisable to go too high on said maximum power output plateau. Moreover, as the same power output is available at lower speeds on the plateau, e.g. around 1500 rpm, as at higher speeds on the plateau, e.g. 2000 rpm, there is, apart from vehicle speed, no advantage in pure operability terms in choosing a higher engine speed.

There are known vehicle systems whereby an appropriate gear is recommended to the driver on the basis of estimates of the engine speed which will be reached after a gear change, on the basis of a certain amount of gearchange time and current running resistance/vehicle weight. If the system finds that there is risk of the engine speed becoming too slow if an upshift is effected, no hints are given, leaving the driver free to employ "unnecessarily" high engine speeds.

US2010262343 refers to a system for automatically limiting the engine speed at inefficient high levels at which upshifts are not deemed appropriate.

US2010/087292 discloses a system and method for controlling and/or regulating a multi-step automatic transmission of a vehicle in which an upshift is prevented if a power limit of the motor of the vehicle is reached. When a driving situation in which the power limit of the motor is reached and recognized, the motor speed is set at a predetermined limit value.

### OBJECTS OF THE INVENTION

One object of the present invention is to propose a method for guidance of driver behaviour during driving of motor vehicles which in a flexible way makes it possible to reduce fuel consumption and potentially reduce engine and gearbox wear.

One object of the present invention is to propose a system for guidance of driver behaviour during driving of motor vehicles which in a flexible way makes it possible to reduce fuel consumption and potentially reduce engine and gearbox wear.

### SUMMARY OF THE INVENTION

These and other objects indicated by the description set out below are achieved by a method, a system, a motor vehicle and a computer programme and a computer programme product of the kinds indicated in the introduction which further present the features indicated in the characterising parts of the attached independent claims 1, 6, 11 13 and 14. Preferred embodiments of the method and the system are defined in the attached dependent claims 2-4 and 6-8.

The invention achieves the objects with a method for guidance of driver behaviour during driving of motor vehicles which comprises the step of determining the consequences of an upshift sequence, comprising the steps of: determining whether effecting an upshift sequence is appropriate from the operability perspective; if an upshift sequence is not appropriate, determining a prevailing engine speed; if said prevailing engine speed is above a first predetermined level, presenting the driver with a suggestion to lower said engine speed. Whether an upshift sequence is appropriate from the operability perspective depends on whether the vehicle's operability would be affected by an upshift sequence, e.g. when travelling uphill, since the upshift sequence will take a certain amount of time and might lead to the vehicle not being able to make its way up the hill.

Reduced fuel consumption and potentially reduced engine and gearbox wear are thus made possible by the driver being him/herself able to consider the suggestion and take a view on whether the engine speed should be lowered by reduced power mobilisation or whether instead an upshift is nevertheless deemed possible in the prevailing situation on the basis of the driver's own driving ability. The fact that engine speed reduction is presented to the driver as a suggestion and is not automatic thus makes it possible with advantage for even a vehicle with manual transmission to be employed in that an upshift sequence can be effected even when lowering the engine speed is recommended. The method according to the invention is independent of whether the vehicle has manual transmission and/or automatic transmission for said upshift sequence.

In one embodiment of the method said first predetermined engine speed is within a range in which an increase in engine speed does not entail any substantial increase in power output. In this case, a suggestion for engine speed lowering is only presented when the power offtake would not be affected by such lowering, making reduced fuel consumption and potentially reduced engine and gearbox wear possible without any change in power offtake and hence nor in operability.

In one embodiment of the method said prevailing engine speed is within an engine speed range that results in a maximum power output plateau for said engine power. In one embodiment of the method the presented suggestion to lower said engine speed is maintained until it is below a second predetermined level. This minimises the risk of the driver not having noticed the suggestion, and thus enhances the potential for efficient driving on the basis of the prevailing situation. Said second predetermined engine speed is preferably likewise within said range in which an increase in engine speed does not entail any substantial increase in power output.

In one embodiment of the method said first predetermined engine speed is higher than said second predetermined engine speed. Accordingly the presentation and its cessation take place in a hysteresis whereby the presentation only occurs when necessary and is maintained so long as the need is likely to continue, so that the driver is not unnecessarily disturbed by presentations when there is no certainty of the need, but the presentation is maintained to a certain lower level of engine speed when the need has been identified at the higher level. This makes efficient driving possible on the basis of the prevailing situation without the driver being unnecessarily disturbed.

The invention achieves the objects with a system for guidance of driver behaviour during driving of motor vehicles which comprises means for determining the consequences of an upshift sequence, comprising means for: determining whether effecting an upshift sequence is appropriate from the operability perspective; means, if an upshift sequence is not appropriate, for determining a prevailing engine speed; means, if said prevailing engine speed is above a first predetermined level, for presenting the driver with a suggestion to lower said engine speed.

Reduced fuel consumption and potentially reduced engine and gearbox wear are thus made possible by the driver being him/herself able to consider the suggestion and take a view on whether the engine speed should be lowered by reduced power mobilisation or whether instead an upshift is nevertheless deemed possible in the prevailing situation on the basis of the driver's own driving ability. The fact that engine speed reduction is presented to the driver as a suggestion and is not automatic thus makes it possible with advantage for even a vehicle with manual transmission to be employed in that an upshift sequence can be effected even when lowering the engine speed is recommended. The system according to the invention is independent of whether the vehicle has manual transmission and/or automatic transmission for said upshift sequence.

In one embodiment of the system said first predetermined engine speed is within a range in which an increase in engine speed does not entail any substantial increase in power output. In this case, a suggestion for engine speed lowering is only presented when the power offtake would not be affected by such lowering, making reduced fuel consumption and potentially reduced engine and gearbox wear possible without any change in power offtake and hence in operability.

In one embodiment of the system said prevailing engine speed is within an engine speed range that results in a maximum power output plateau for said engine power.

In one embodiment the system comprises means for maintaining the presented suggestion to lower said engine speed until the engine speed is below a second predetermined level. This minimises the risk of the driver not having noticed the suggestion, and thus enhances the potential for efficient driving on the basis of the prevailing situation. Said second predetermined engine speed is preferably likewise within said range in which an increase in engine speed does not entail any substantial increase in power output.

In one embodiment of the system said first predetermined engine speed is higher than said second predetermined engine speed. Accordingly the presentation and its cessation take place in a hysteresis whereby the presentation only occurs when necessary and is maintained so long as the need is likely to continue, so that the driver is not unnecessarily disturbed by presentations when there is no certainty of the need, but the presentation is maintained to a certain lower level of engine speed when the need has been identified at the higher level. This makes efficient driving possible on the basis of the prevailing situation without the driver being unnecessarily disturbed.

### DESCRIPTION OF DRAWINGS

The present invention will be better understood by reading the detailed description set out below in conjunction with the attached drawings, in which the same reference notations are used for similar items throughout the various views, and
Fig. 1 schematically illustrates a motor vehicle according to an embodiment of the present invention,
Fig. 2 schematically illustrates a system for guidance of driver behaviour during driving of motor vehicles according to an embodiment of the present invention,
Fig. 3 schematically illustrates the engine speed of a vehicle when being driven along an itinerary with an altitude profile according to an embodiment of the present invention,
Fig. 4 is a schematic block diagram of a method for guidance of driver behaviour during driving of motor vehicles according to an embodiment of the present invention, and
Fig. 5 schematically illustrates a computer according to an embodiment of the present invention.

### DESCRIPTION OF EMBODIMENTS

The term "link" refers herein to a communication link which may be a physical connection such as an opto-electronic communication line, or a non-physical connection such as a wireless connection, e.g. a radio link or microwave link.

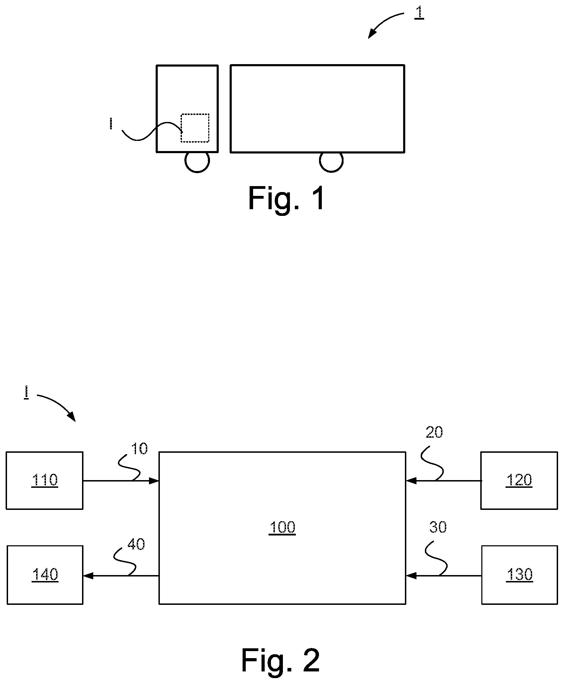

Fig. 1 illustrates schematically a motor vehicle 1 according to an embodiment of the present invention. The vehicle exemplified is a heavy vehicle in the form of a truck but might alternatively be any suitable vehicle, e.g. a bus or a car. The vehicle is provided with a system I according to the present invention. The vehicle has a manual transmission and/automatic transmission for upshift sequences according to the present invention.

Fig. 2 is a schematic block diagram of a system I for guidance of driver behaviour during driving of motor vehicles according to an embodiment of the present invention.

The system I comprises an electronic control unit 100 for said guidance.

The system I comprises upshift assessment means 110 for determining whether effecting an upshift sequence is appropriate from the operability perspective. Said upshift assessment means comprises in one variant engine speed determination means for determining the vehicle's engine speed, gearchange time assessment means for assessing upshift gearchange times, gear ratio determination means for determining the vehicle's current gear ratio, and running resistance determination means for determining the vehicle's current running resistance. The engine speed determination means comprises in one variant a revolution counter device. The gearchange time assessment means comprises calculation means for which gearchange time is an assumed parameter which varies with the type of gear change required, e.g. range or split, and for cases where gear changing takes place with manual transmission or automatic transmission. Said gear ratio determination means comprises in one variant means for detecting the transmission's gear position.

The running resistance determination means comprises calculation means using equations for determination of current running resistance based inter alia on rolling resistance and air resistance. Current running resistance generates a deceleration during the upshift process when there is no propulsive force in the power train.

The system I comprises engine speed determination means 120 for continuously determining the vehicle's engine speed. Said means 120 comprise in one variant an engine speed counter device.

The system I comprises power output determination means 130 for determining the vehicle's prevailing engine power output in order thereby to determine whether its prevailing engine speed is on a power output plateau, i.e. within a range within which an engine speed increase does not entail any substantial power output increase. Regarding that prevailing engine speed is within an engine speed range in which an engine speed increase does not entail any substantial power output increase is referred to that the level of engine power at the prevailing engine speed is at maximum power output plateau, i.e. that the level of engine power at a lower engine speed within this engine speed range will not significantly differ from the level of engine power at a higher engine speed within this engine speed range.

The power output determination means comprises in one variant sensor means.

The system I further comprises action suggestion presentation means 140 for responding to the engine speed being above a first predetermined level by presenting the driver with suggestions for acting to lower said engine speed.

Said means 140 may comprise any appropriate means for presenting action suggestions, comprising means for visual presentation such as continuous or flashing lights indicating proposed forms of action and/or text and/or symbols indicating suggested forms of action, means for auditory presentation comprising alarms and/or voice presentation of suggested forms of action, means for tactile information comprising vibrations or the like to indicate suggested action, e.g. vibration or the like in an accelerator pedal. Said means 140 comprise in one variant a vehicle display unit situated close to the driver, in one variant in the vehicle's instrument cluster, for presentation of said suggestions of action to lower the engine speed.

The electronic control unit 100 is signal-connected to said upshift assessment means 110 via a link 10 enabling it to receive from said means 110 a signal which represents upshift data for assessment of risks involved in upward changes of gear, e.g. the engine speed being estimated to become too slow if an upshift is effected, and hence for determining whether effecting an upshift sequence is appropriate from the operability perspective.

The electronic control unit 100 is signal-connected to said engine speed determination means 120 via a link 20 enabling it to receive from said means 120 a signal which represents data on prevailing engine speed.

The electronic control unit 100 is signal-connected to said power output determination means 130 via a link 30 enabling it to receive from said means 130 a signal which represents data on prevailing engine power output.

The electronic control unit 100 is signal-connected to said action suggestion presentation means 140 via a link 40 enabling it to send to said means 140 a signal which represents action suggestion data for presenting the driver with suggestions for action to lower the engine speed.

The electronic control unit 100 is adapted accordingly to processing said upshift data in order to determine whether effecting an upshift sequence is appropriate from the operability perspective. If it finds that an upshift sequence is not appropriate, the electronic control unit is adapted to processing said engine speed data in order to determine the prevailing engine speed. If it finds that the prevailing engine speed is above a first predetermined level, the electronic control unit is adapted to sending to said means 140 a signal which represents action suggestion data for presenting the suggestion to lower said engine speed.

Thus presenting suggestions for reducing the engine speed makes it possible to reduce fuel consumption and potentially reduce engine and gearbox wear. The driver can him/herself consider the suggestion and take a view on whether the engine speed should be lowered by reduced power mobilisation or whether instead an upshift is nevertheless deemed possible in the prevailing situation on the basis of the driver's own driving ability. The fact that engine speed reduction is presented to the driver as a suggestion and is not automatic thus makes it possible with advantage for even a vehicle with manual transmission to be employed in that an upshift sequence can be effected even when lowering the engine speed is recommended. The system according to the invention is independent of whether the vehicle has manual transmission and/or automatic transmission for said upshift sequence.

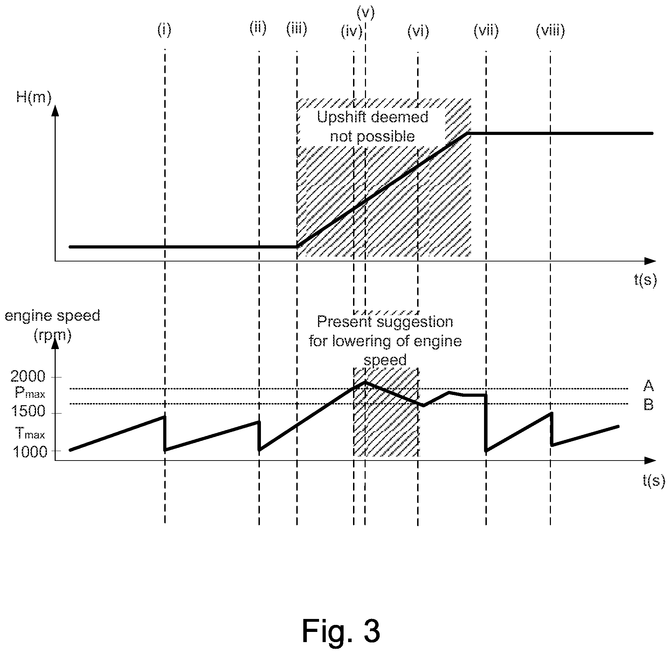

Fig. 3 illustrates schematically the engine speed of a vehicle travelling along an itinerary with an altitude profile according to an embodiment of the present invention. In this case the vehicle is travelling along an itinerary where the altitude H varies.

In the exemplified process, the vehicle travels along an itinerary with power mobilisation and consequently increased engine speed, and at a first location (i) at a first point in time along the itinerary while travelling on a substantially level running surface an upshift is effected when the engine speed has increased to a certain level at which the driver in one variant is presented with the suggestion that an upshift be deemed possible. The engine speed thereupon drops. The vehicle is here running within an engine speed range in which a maximum torque Tₘₐₓ is available, so the power output rises with increasing engine speed within this range. This engine speed range may be described as a range for economical operation.

The vehicle proceeds further along the itinerary with power mobilisation and consequently increased engine speed, and at a second location (ii) at a second point in time along the itinerary while continuing to travel on a substantially level running surface a further upshift is effected when the engine speed has increased to a certain level at which the driver in one variant is presented with the suggestion that an upshift be deemed possible. The engine speed thereupon drops. The vehicle is here running within the engine speed range in which said maximum torque Tₘₐₓ is available.

The vehicle proceeds further along the itinerary with power mobilisation and consequently increased engine speed, and at a third location (iii) at a third point in time the itinerary changes to a certain uphill gradient where said upshift assessment means 110 deems that effecting an upshift sequence is not appropriate.

The vehicle proceeds further along the itinerary with power mobilisation and consequently further increased engine speed, and at a fourth location (iv) at a fourth point in time the engine speed has risen above a first predetermined level A at which said engine speed determination means 120 finds that the engine speed is above a first predetermined level A. At this stage said action suggestion presentation means 140 presents the driver with the suggestion to lower said engine speed. The vehicle is here running within an engine speed range with constant power output Pₘₐₓ, so the power output does not change with increased engine speed.

The vehicle proceeds further up the hill, and at a fifth location (v) at a fifth point in time the driver becomes aware of the suggestion presented and reduces the power mobilisation so that the engine speed begins to drop.

The vehicle proceeds further up the hill with decreasing engine speed which at a sixth location (vi) at a sixth point in time has dropped below a second predetermined level B at which said engine speed determination means 120 finds that such is the case. The presentation to the driver of the suggestion to lower said engine speed is thereupon deactivated so that he/she is no longer recommended to lower the engine speed., The vehicle proceeds further up the hill with power mobilisation and consequently increased engine speed is above the second predetermined level B but not the first predetermined level A, and does so until the itinerary levels out to a substantially level running surface on which at a seventh location (vii) at a seventh point in time a further upshift takes place, whereupon the driver in one variant is presented with the suggestion that an upshift be deemed possible. At this stage the engine speed drops.

The vehicle proceeds further along the itinerary with power mobilisation and consequently increased engine speed, and at an eighth location (viii) at an eighth point in time, continuing on a substantially level running surface, a further upshift takes place when the engine speed has increased to a certain level at which the driver in one variant is presented with the suggestion that an upshift be deemed possible. At this stage the engine speed drops.

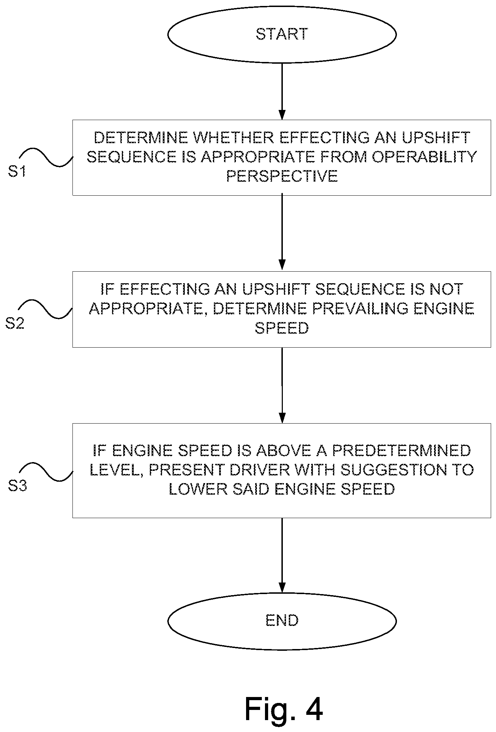

Fig. 4 is a schematic block diagram of a method for guidance of driver behaviour during driving of motor vehicles according to an embodiment of the present invention.

In one embodiment the method for guidance of driver behaviour during driving of motor vehicles comprises a first step S1 of determining whether effecting an upshift sequence is appropriate from the operability perspective.

In one embodiment the method for guidance of driver behaviour during driving of motor vehicles comprises a second step S2 in which, if an upshift sequence is not appropriate, the prevailing engine speed is determined.

In one embodiment the method for guidance of driver behaviour during driving of motor vehicles comprises a third step S3 in which, if the engine speed is above a predetermined level, the driver is presented with the suggestion to lower said engine speed.

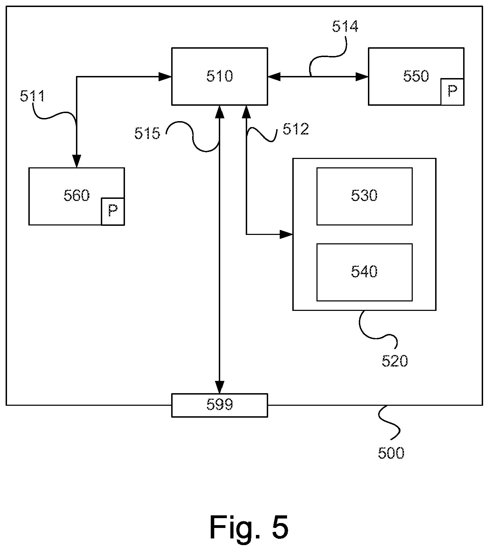

Fig. 5 is a diagram of one version of a device 500. The control unit 100 described with reference to Figure 2 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for guidance of driver behaviour during driving of motor vehicles according to the innovative method. The programme P comprises routines for determining whether effecting an upshift sequence is appropriate from the operability perspective. It comprises routines for determining the prevailing engine speed in cases where an upshift sequence is not appropriate. It comprises routines for presenting the driver with the suggestion to lower said engine speed in cases where it is above a predetermined level. The programme P may be stored in an executable form or in compressed form in a memory 560 and/or in a read/write memory 550.

Where the data processing unit 510 is described as performing a certain function, it means that it conducts a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The links associated for example with the control unit 100 may be connected to the data port.

When data are received on the data port 599, they are stored temporarily in the second memory element 540. When input data received have been temporarily stored, the data processing unit 510 is prepared to conduct code execution as described above. The signals received on the data port may be used by the device 500 for guidance of driver behaviour during driving of motor vehicles. The signals received on the data port may be used by the device 500 to determine the prevailing engine speed in cases where effecting an upshift sequence is not appropriate. The signals received on the data port may be used by the device 500 to present the driver with the suggestion to lower said engine speed in cases where it is above a predetermined level.

Parts of the methods herein described may be conducted by the device 500 by means of the data processing unit 510 which runs the programme stored in the memory 560 or the read/write memory 550. When the device 500 runs the programme, methods herein described are executed.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method for guidance of driver behaviour during driving of motor vehicles (1) comprising the step of determining the consequences of an upshift sequence, comprising the further steps of:
- determining (S1) whether effecting an upshift sequence is appropriate from the operability perspective;
- if an upshift sequence is not appropriate, determining (S2) a prevailing engine speed, **characterised by**:
- if said prevailing engine speed is above a first predetermined level (A), presenting (S3) the driver with a suggestion to lower said engine speed.

2. A method according to claim 1, in which said first predetermined engine speed level (A) is within a range in which an engine speed increase does not entail any substantial power output increase.

3. A method according to claim 1 or 2, in which said prevailing engine speed is within an engine speed range that results in a maximum power output plateau for said engine power.

4. A method according to claim 1 or 2, in which the presented suggestion to lower said engine speed is maintained until the engine speed is below a second predetermined level (B).

5. A method according to claim 4, in which said first predetermined engine speed level (A) is higher than said second predetermined engine speed level (B).

6. A system for guidance of driver behaviour during driving of motor vehicles (1) comprising means (100, 110, 120) for determining the consequences of an upshift sequence, comprising means (100, 110, 120) for
i) determining whether effecting an upshift sequence is appropriate from the operability perspective;
ii) means (100, 120) for determining a prevailing engine speed if an upshift sequence is not appropriate; **characterised by**:
iii) means (100, 140) for presenting the driver with a suggestion to lower said engine speed if said prevailing engine speed is above a first predetermined level (A).

7. A system according to claim 6, in which said first predetermined engine speed level (A) is within a range in which an engine speed increase does not entail any substantial engine power output increase.

8. A system according to claim 6 or 7, in which said prevailing engine speed is within an engine speed range that results in a maximum power output plateau for said engine power.

9. A system according to claim 6 or 7, comprising means (100, 120) for maintaining the presented suggestion to lower said engine speed until it is below a second predetermined level (B)

10. A system according to claim 9, in which said first predetermined engine speed level (A) is higher than said second predetermined engine speed level (B).

11. A motor vehicle (1) provided with a system (I) according to any one of claims 6-10.

12. A motor vehicle according to claim 11, provided with a manual transmission and/or automatic transmission for said upshift sequence.

13. A computer programme (P) for guidance of driver behaviour during driving of motor vehicles, which programme (P) comprises programme code which, when run by an electronic control unit (100) or another computer (500) connected to the electronic control unit (100), enables the electronic control unit (100) to perform steps according to claims 1-5.

14. A computer programme product comprising a digital storage medium which stores the computer programme according to claim 13.

## Patentansprüche

1. Verfahren zur Fahrverhaltensanleitung beim Fahren von Kraftfahrzeugen (1), umfassend den Schritt des Ermittelns der Auswirkungen einer Hochschaltsequenz, ferner umfassend die Schritte:
- Ermitteln (S1), ob ein Bewirken einer Hochschaltsequenz aus der Funktionsfähigkeitsperspektive zweckmäßig ist,
- falls eine Hochschaltsequenz nicht zweckmäßig ist, Ermitteln (S2) einer vorherrschenden Motordrehzahl, **gekennzeichnet durch**:
- falls die vorherrschende Motordrehzahl über einem ersten vorbestimmten Niveau (A) liegt, Präsentieren (S3) eines Vorschlags zum Verringern der Motordrehzahl an den Fahrer.

2. Verfahren nach Anspruch 1, bei dem das erste vorbestimmte Motordrehzahlniveau (A) innerhalb eines Bereichs liegt, in dem eine Motordrehzahlzunahme keine wesentliche Leistungssteigerung zur Folge hat.

3. Verfahren nach Anspruch 1 oder 2, bei dem die vorherrschende Motordrehzahl innerhalb eines Motordrehzahlbereichs liegt, der zu einem maximalen Leistungsplateau für diese Motorleistung führt.

4. Verfahren nach Anspruch 1 oder 2, bei dem der präsentierte Vorschlag zum Verringern der Motordrehzahl aufrechterhalten wird, bis die Motordrehzahl sich unterhalb eines zweiten vorbestimmten Niveaus (B) befindet.

5. Verfahren nach Anspruch 4, bei dem das erste vorbestimmte Motordrehzahlniveau (A) höher ist als das zweite vorbestimmte Motordrehzahlniveau (B).

6. System zur Fahrverhaltensanleitung beim Fahren von Kraftfahrzeugen (1), umfassend eine Einrichtung (100, 110, 120) zum Ermitteln der Auswirkungen einer Hochschaltsequenz, umfassend eine Einrichtung (100, 110, 120) zum i) Ermitteln, ob ein Bewirken einer Hochschaltsequenz aus der Funktionsfähigkeitsperspektive zweckmäßig ist, ii) eine Einrichtung (100, 120) zum Ermitteln einer vorherrschenden Motordrehzahl, falls eine Hochschaltsequenz nicht zweckmäßig ist, **gekennzeichnet durch**:
iii) eine Einrichtung (100, 140) zum Präsentieren eines Vorschlags zum Verringern der Motordrehzahl an den Fahrer, falls die vorherrschende Motordrehzahl oberhalb eines ersten vorbestimmten Niveaus (A) liegt.

7. System nach Anspruch 6, bei dem das erste vorbestimmte Motordrehzahlniveau (A) innerhalb eines Bereichs liegt, in dem eine Motordrehzahlzunahme zu keiner wesentlichen Motorleistungssteigerung führt.

8. System nach Anspruch 6 oder 7, bei dem die vorherrschende Motordrehzahl innerhalb eines Motordrehzahlbereichs liegt, der zu einem maximalen Leistungsplateau für diese Motorleistung führt.

9. System nach Anspruch 6 oder 7, umfassend eine Einrichtung (100, 120) zum Aufrechterhalten des präsentierten Vorschlags zum Verringern der Motordrehzahl, bis sie sich unterhalb eines zweiten vorbestimmten Niveaus (B) befindet.

10. System nach Anspruch 9, bei dem das erste vorbestimmte Motordrehzahlniveau (A) höher ist als das zweite vorbestimmte Motordrehzahlniveau (B).

11. Kraftfahrzeug (1), das mit einem System (I) nach einem der Ansprüche 6 bis 10 ausgerüstet ist.

12. Kraftfahrzeug nach Anspruch 11, welches mit einem manuellen Getriebe und/oder einem Automatikgetriebe für die Hochschaltsequenz ausgestattet ist.

13. Computerprogramm (P) zur Fahrverhaltensanleitung beim Fahren von Kraftfahrzeugen, wobei das Programm (P) Programmcode enthält, der, wenn der auf einer elektronischen Steuereinheit (100) oder einem anderen mit der elektronischen Steuereinheit (100) verbundenen Computer (500) abläuft, die elektronische Steuereinheit (100) in die Lage versetzt, Schritte gemäß den Ansprüchen 1 bis 5 auszuführen.

14. Computerprogrammprodukt umfassend ein digitales Speichermedium, welches das Computerprogramm nach Anspruch 13 speichert.

## Revendications

1. Procédé de guidage d'un comportement de conducteur durant la conduite de véhicules motorisés (1) comprenant l'étape de la détermination de conséquences d'une séquence de changement de vitesse, comprenant les étapes supplémentaires de :
- la détermination (S1) de si la réalisation d'une séquence de changement de vitesse est appropriée à partir du point de vue de l'opérabilité ;
- si une séquence de changement de vitesse n'est pas appropriée, la détermination (S2) d'une vitesse moteur prédominante,
**caractérisée en ce que** :
- si ladite vitesse du moteur prédominante est supérieure au premier niveau prédéterminé (A), la présentation (S3) au conducteur avec une suggestion pour abaisser ladite vitesse du moteur.

2. Procédé selon la revendication 1, dans lequel ledit premier niveau de vitesse du moteur prédéterminé (A) se trouve dans une plage dans laquelle une augmentation de vitesse du moteur n'entraîne aucune augmentation substantielle de la sortie de puissance.

3. Procédé selon la revendication 1 ou 2, dans lequel ladite vitesse du moteur prédominante se trouve dans une plage de vitesse du moteur qui entraîne un plateau de sortie de puissance maximum pour ladite puissance du moteur.

4. Procédé selon la revendication 1 ou 2, dans lequel la suggestion présentée pour abaisser ladite vitesse du moteur est maintenue jusqu'à ce que la vitesse du moteur soit inférieure à un deuxième niveau prédéterminé (B).

5. Procédé selon la revendication 4, dans lequel ledit premier niveau de vitesse du moteur prédéterminé (A) est supérieur audit deuxième niveau de vitesse du moteur prédéterminé (B).

6. Système pour le guidage du comportement d'un conducteur durant la conduite de véhicules motorisés (1) comprenant des moyens (100, 110, 120) pour la détermination des conséquences d'une séquence de changement de vitesse, comprenant des moyens (100, 110, 120) pour
i) la détermination de si la réalisation d'une séquence de changement de vitesse est appropriée à partir du point de vue de l'opérabilité ;
ii) des moyens (100, 120) pour la détermination d'une vitesse moteur prédominante si une séquence de changement de vitesse n'est pas appropriée ; **caractérisée en ce que** :
iii) des moyens (100, 140) pour la présentation au conducteur d'une suggestion visant à abaisser ladite vitesse du moteur si ladite vitesse du moteur prédominante est supérieure à un premier niveau prédéterminé (A).

7. Système selon la revendication 6, dans lequel ledit premier niveau de vitesse moteur prédéterminé (A) se trouve dans une plage dans laquelle une augmentation de vitesse du moteur n'entraîne aucune augmentation substantielle de la sortie de puissance du moteur.

8. Système selon la revendication 6 ou 7, dans lequel ladite vitesse du moteur prédominante se trouve dans une plage de vitesse du moteur qui entraîne un plateau de sortie de puissance maximum pour ladite puissance du moteur.

9. Système selon la revendication 6 ou 7, comprenant des moyens (100, 120) pour le maintien de la suggestion présentée pour abaisser ladite vitesse du moteur jusqu'à ce qu'elle soit inférieure à un deuxième niveau prédéterminé (B).

10. Système selon la revendication 9, dans lequel ledit premier niveau de vitesse du moteur prédéterminé (A) est supérieur audit deuxième niveau de vitesse du moteur prédéterminé (B).

11. Véhicule à moteur (1) pourvu d'un système (I) selon l'une quelconque des revendications 6-10.

12. Véhicule motorisé selon la revendication 11, fourni avec une transmission manuelle et/ ou une transmission automatique pour ladite séquence de changement de vitesse.

13. Programme informatique (P) pour le guidage d'un comportement de conducteur durant la conduite de véhicules motorisés, lequel programme (P) comprend un code de programme qui, lorsqu'il est exécuté par une unité de commande électronique (100) ou un autre ordinateur (500) connecté à l'unité de commande électronique (100), permet à l'unité de commande électronique (100) d'exécuter des étapes selon les revendications 1-5.

14. Produit de programme informatique comprenant un support de stockage numérique qui stocke le programme informatique selon la revendication 13.
